# DEMANDE DE BREVET EUROPEEN

(11) **EP 0 686 422 A1**
(43) Date de publication de la demande: **13.12.1995**
(21) Numéro de dépôt: 95490021.3
(22) Date de dépôt: 02.06.1995
(51) Int. Cl.: B01D 53/26, B01D 53/04

(54) **Dispositif absorbeur d'humidité**

(30) Priorité: 07.06.1994 FR 9407159
(71) Demandeur: SODEPAC INTERNATIONAL, S.A., F-59320 Hallennes Lez (FR)
(72) Inventeur: Vasseur, Jean, F-59000 Lille (FR)
(74) Mandataire: Ecrepont, Robert

(57) **Abrégé**

L'invention se rapporte à un dispositif absorbeur d'humidité logeant un emballage une substance active (3), lequel emballage :
- comprend au moins deux feuilles (4, 5) de matériau assemblées par leurs bords en vue de constituer une poche fermée et
- est perméable à l'air humide et imperméable à la solution produite par la réaction de l'eau sur la substance active (3).

Elle est **caractérisée** en ce que l'enveloppe constituant la poche interne (6) logeant la substance active est en tissu absorbant présentant des caractéristiques d'absorption élevée comparables à un buvard.

## Description

L'invention se rapporte à un dispositif absorbeur d'humidité.

Classiquement, pour éviter que, lors du transport ou du stockage de certaines marchandises, l'humidité de l'air se condense et se dépose dans le local ou le conteneur dans lequel ces marchandises sont placées, il est courant d'utiliser des dispositifs absorbeurs que l'on place dans le volume à protéger.

Ces dispositifs permettent également de diminuer le taux hygrométrique des caves des particuliers ou des entreprises.

De tels dispositifs sont connus des documents FR-A-2.583.990 et FR-A-2.506.175.

Il consiste en une quantité prédéterminée d'une substance active tel un sel déliquescent logé dans un emballage, lequel emballage, d'une part, est en matériau perméable à l'air humide mais, d'autre part, est imperméable à la solution rejetée par le sel déliquescent par réaction avec l'eau.

Classiquement, cet emballage consiste en une gaine faite à partir d'un flan de ce matériau tel un non tissé approprié dont les bords sont associés par un moyen d'association en vue de délimiter une poche close contenant la substance active.

Pour fermer cette poche, il est possible d'en souder les bords par une méthode appropriée au type de matériau utilisé pour confectionner la gaine tel une soudure ultra-son mais cela nécessite, d'une part, des investissements matériels importants et, d'autre part, lorsqu'on change l'épaisseur du flan ou le matériau, il faut modifier les réglages voire changer de méthode.

Pour éviter ces inconvénients, les bords de ce flan de matériau sont le plus souvent assemblés par une couture.

Notamment au niveau de ces coutures, il peut y avoir de légères fuites de la solution rejetée par la substance active.

Ces fuites sont gênantes et, notamment, pourraient éventuellement contaminer les produits à protéger de l'humidité.

Pour cette raison, il est connu (FR-A-2.506.175) de placer la gaine dans un récipient ouvert sur le dessus et abritant un support sur lequel repose la substance active et délimitant dans le récipient deux volumes dont un volume situé à sa base et formant un réservoir qui communique avec le volume situé au dessus du support par un orifice muni d'un clapet permettant à la solution produite par la substance active de tomber dans le réservoir mais interdisant à celle-ci de ressortir si, par accident, le récipient était renversé.

De tels dispositifs sont relativement coûteux à fabriquer.

On connaît également un dispositif (FR-A-2.583.990) dans lequel à la substance active est mélangée une matière absorbante de la solution produite par la substance active, le tout étant alors logé dans la même poche.

L'absorption n'est pas toujours complète et/ou immédiate et des fuites peuvent subsister de sorte que le problème d'étanchéité de la poche reste entier.

Pour constituer la poche, il n'est pas toujours facile de déterminer un matériau qui soit perméable à l'air et imperméable à la solution et, de ce fait, il est connu d'utiliser deux feuilles de matière différente, l'une étant perméable à l'air et l'autre imperméable à la solution produite par la substance active que contient la poche.

Est connu un dispositif absorbeur (GB-A-2.161.093) où les bords de chacune des feuilles sont assemblés entre eux indépendamment de l'autre feuille pour constituer une poche interne indépendante de la poche externe.

Dans certaines réalisations connues, les bords de ces feuilles de matériau sont cousus ensemble lors de la même opération.

Comme indiqué précédemment, au niveau de la couture, il peut se produire des fuites.

Un des résultats que l'invention vise à obtenir est un dispositif absorbeur d'humidité du type précité qui remédie à ces inconvénients.

A cet effet, l'invention a pour objet un tel dispositif d'absorption notamment **caractérisé** en ce que l'enveloppe constituant la poche interne logeant la substance active est en tissu absorbant présentant des caractéristiques d'absorption élevée comparables à un buvard.

L'invention sera bien comprise à l'aide de la description ci-après faite à titre d'exemple non limitatif en regard du dessin ci-annexé qui représente schématiquement :

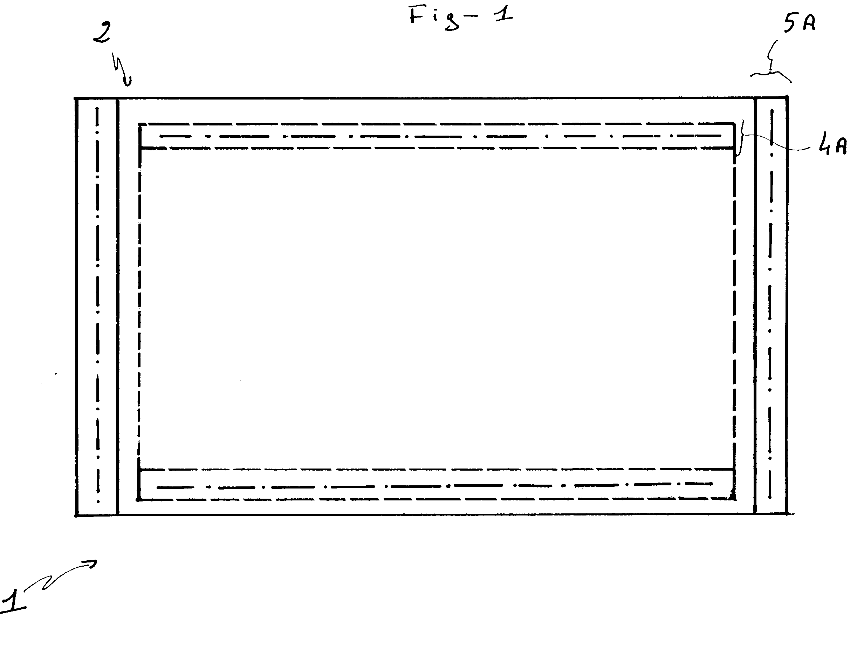

- figure 1 : une vue d'un dispositif,

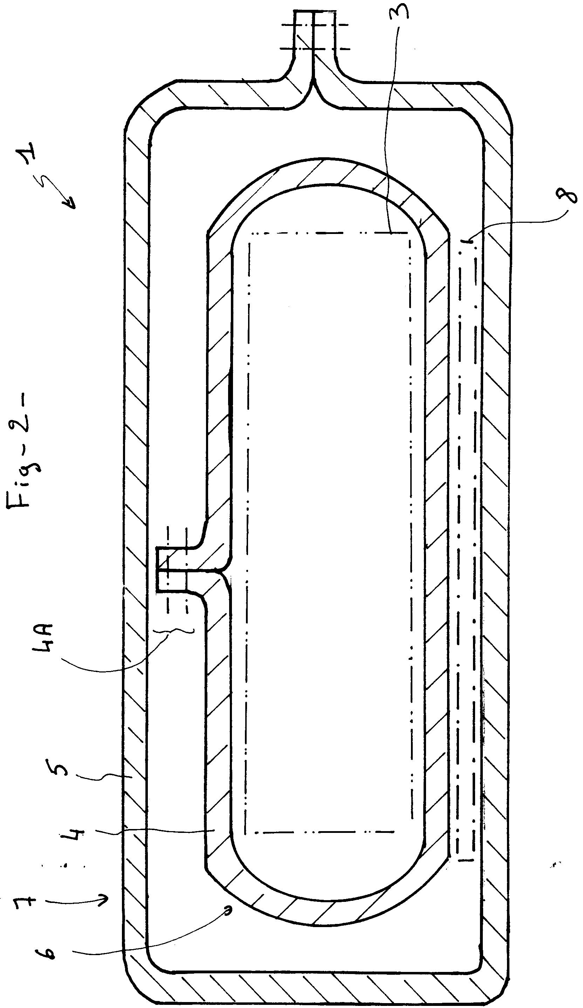

- figure 2 : une vue en coupe d'une variante du dispositif.

En se reportant au dessin, on voit un dispositif 1 absorbeur d'humidité destiné notamment à être placé dans les conteneurs de transport d'objets ou d'aliments pour lesquels le taux d'humidité de l'air doit rester sous une valeur prédéterminée.

De manière classique, le dispositif 1 absorbeur loge dans un emballage 2 une substance active 3 comprenant notamment un sel déliquescent.

Cet emballage 2 comprend au moins deux feuilles 4, 5 de matériau assemblées par leurs bords en vue de constituer une poche fermée logeant la substance active précitée.

L'emballage est perméable à l'air humide et imperméable à la solution produite par la réaction de l'eau sur la substance active 3.

La substance active 3 est, de préférence, constituée d'un chlorure de calcium.

Avantageusement, la substance active 3 est mélangée avec une poudre absorbante.

Les bords 4A, 5A de chacune des feuilles sont assemblés entre eux indépendamment de ceux de l'autre feuille pour constituer une poche 6 interne indépendante de la poche 7 immédiatement au dessus et,
selon une caractéristique de l'invention, l'enveloppe constituant la poche interne 6 logeant la substance active est en tissu absorbant présentant des caractéristiques d'absorption élevée comparables à un buvard.

De préférence, on intercale entre chaque poche 6, 7 une quantité prédéterminée de matière absorbante 8.

De préférence, lorsque les poches 6, 7 sont constituées à partir d'une gaine dont les deux extrémités sont fermées notamment par une couture, la poche externe logeant la poche interne a ses extrémités orientées perpendiculairement à celles de la première poche de manière que les zones d'extrémité de la poche interne soient en regard d'une zone de la poche externe dépourvue de fermeture et notamment de couture.

De préférence, la gaine est un non tissé notamment en polypropylène.

Les qualités d'absorbtion de la feuille constituant la poche interne évite l'apparition des fuites.

## Revendications

1. Dispositif absorbeur d'humidité logeant dans un emballage (2) une substance active (3),
lequel emballage :
- comprend au moins deux feuilles (4, 5) de matériau assemblées par leurs bords en vue de constituer une poche fermée et
- est perméable à l'air humide et imperméable à la solution produite par la réaction de l'eau sur la substance active (3),
les bords (4A, 5A) de chacune des feuilles étant assemblés entre eux indépendamment de ceux de l'autre feuille pour constituer une poche (6) interne indépendante de la poche (7) immédiatement au dessus,
ce dispositif étant **caractérisé** en ce que l'enveloppe constituant la poche interne (6) logeant la substance active est en tissu absorbant présentant des caractéristiques d'absorption élevée comparables à un buvard.

2. Dispositif selon la revendication 1 **caractérisé** en ce qu'entre chaque poche (6, 7) est intercalée une quantité prédéterminée de matière absorbante (8).

3. Dispositif selon la revendication 1 **caractérisé** en ce que, lorsque les poches (6, 7) sont constituées à partir d'une gaine dont les deux extrémités sont fermées, la poche externe logeant la poche interne a ses extrémités orientées par rapport à celles de la première poche de manière que les zones d'extrémité de la poche interne soient en regard d'une zone de la poche externe dépourvue de fermeture.

4. Dispositif selon la revendication 3 **caractérisé** en ce que les poches (6, 7) sont orientées perpendiculairement l'une à l'autre.

5. Dispositif selon la revendication 3 ou 4 **caractérisé** en ce que la gaine est un non tissé.

6. Dispositif selon la revendication 5 **caractérisé** en ce que la gaine est en polypropylène.
